# FASCICULE DE BREVET EUROPEEN

(11) **EP 0 363 234 B1**
(45) Date de publication et mention de la délivrance du brevet: **21.04.1993**
(21) Numéro de dépôt: 89402428.0
(22) Date de dépôt: 06.09.1989
(51) Int. Cl.: A62B 35/04

(54) **Dispositif de sécurité pour équipement individuel de protection contre les chutes**
Schutzvorrichtung für persönliche Absturzsicherungsausrüstung
Personal equipment safety device for protection against dropping

(30) Priorité: 06.09.1988 FR 8811648
(43) Date de publication de la demande: 11.04.1990
(73) Titulaire: Peltier, Marcel, 92190 Meudon (FR)
(72) Inventeur: Peltier, Marcel, 92190 Meudon (FR)
(74) Mandataire: Sauvage, Renée

(56) Documents cités:
- DE-A- 3 347 725
- DE-B- 1 124 312
- FR-A- 2 448 355
- US-A- 3 167 346

## Description

### Dispositif de sécurité pour équipement individuel de protection contre les chutes.

La présente invention concerne un dispositif de sécurité pour équipement individuel de protection contre les chutes du type comprenant un harnais fixé à la première extrémité d'une corde dont la seconde extrémité est reliée à un organe d'accrochage susceptible d'être temporairement réuni à un point d'ancrage situé au-dessus de l'utilisateur comme décrit dans le préambule de la revendication 1.

Les travaux en élévation effectués sur les parties extérieures des constructions (bâtiments, ouvrages d'art ou de génie civil) nécessitent toujours le respect de conditions strictes de sécurité pour le personnel et, notamment, le port d'un équipement individuel de protection contre les chutes, tel qu'un harnais.

Ces équipements sont généralement utilisés par les entreprises de construction, de ravalement, de nettoyage, d'isolation, de menuiserie, de charpente, etc., ainsi que par toutes les personnes qui doivent intervenir en façade ou en toiture.

La fixation au bâtiment peut se faire soit par l'intermédiaire de montages utilisant des éléments de la construction, tels que balcons, ouvertures, composants de charpente, etc., soit au moyen d'ancrages spéciaux dans la maçonnerie.

Il va de soi que le dispositif de sécurité doit être fiable, qu'il ne doit pas entraver les évolutions du personnel qui en est équipé et que son utilisation doit être extrêmement simple, toute complication étant de nature à inciter le personnel à négliger les consignes de sécurité.

La présente invention permet de répondre à ces exigences, de manière satisfaisante, en proposant un dispositif du type précité qui se caractérise en ce que la branche mobile est articulée à l'extrémité superieure de la branche fixe, l'extrémité libre externe de la branche mobile offrant, sur l'un de ses bords, des moyens de verrouillage et, sur son bord opposé, une encoche de blocage, tandis que l'extrémité libre inférieure du C de la branche fixe offre, d'une part, des moyens de verrouillage complémentaires à ceux de la branche mobile et, d'autre part, le passage traversant intersecte l'espace occupé par l'extrémité de verrouillage de la branche mobile lorsqu'elle est verrouillée sur la branche fixe, le moyen de suspension de la corde venant se loger dans l'encoche de blocage de la branche mobile en position de verrouillage pour interdire l'ouverture du crochet tant que le moyen de suspension n'est pas soulagé de toute traction.

Grâce à cette structure, tant que le moyen de suspension repose dans l'encoche de blocage de la branche mobile - ce qu'il fait sous l'effet de son propre poids et de celui de la corde - il ne peut se produire d'ouverture accidentelle du crochet, même si les moyens de desengagement des moyens de verrouillage sont actionnés.

On avait, certes, réalisé des crochets à ouverture et fermeture rapides antérieurement à l'invention, comme le montre par exemple les documents DE-A- 3 3 47725 et US-A-3 167 346. Cependant, ces crochets, conçus pour d'autres usages, n'apporteraient pas la sécurité voulue dans l'application visée ici. Ainsi, le crochet décrit dans US-A-3 167 346 qui est conçu pour remonter un canot à bord d'un bateau, est suspendu à un câble de treuil traversant l'extrémité libre supérieure du C de sa branche fixe, tandis que l'organe de suspension de la charge - du canot - est enfilé dans le crochet. Le verrouillage se fait au moyen d'un cliquet soumis à l'effet d'un ressort tendant à le maintenir en position de fermeture, effet qui peut être contrarié et surmonté par traction sur une cordelette. Il n'est prévu aucun moyen pour empêcher l'ouverture accidentelle du crochet si, par inadvertance, une traction est exercée sur la cordelette, ce qui peut arriver si un utilisateur marche sur la cordelette pendante ou si celle-ci vient à s'accrocher dans un obstacle.

Dans une forme d'exécution pratique de l'invention, l'articulation, entre la branche mobile et la branche fixe, se fait, au moyen d'un axe de pivotement passant par l'extrémité libre supérieure du C de la branche fixe et par un point intermédiaire de la branche mobile, la partie de la branche mobile s'étendant entre le point d'articulation et son extrémité libre interne formant bras de saisie du point d'ancrage, le pivotement de la branche mobile en vue du verrouillage du crochet, à l'encontre de la force d'un ressort qui tend à maintenir le crochet ouvert, résultant de l'appui exercé par le point d'ancrage sur le bras de saisie lorsqu'ils sont en contact l'un avec l'autre et qu'une traction, vers le bas, est exercée sur le crochet.

Ainsi, il suffit à l'utilisateur de crocheter le point d'ancrage avec le bras de saisie et d'exercer une traction pour que le crochet se referme et se verrouille.

Dans une forme d'exécution préférée, la branche fixe du crochet est montée à l'extrémité d'une perche de manoeuvre qui peut être téléscopique. L'intérêt de cette mesure est le suivant : il peut arriver que le personnel soit amené à travailler à une certaine distance des points d'ancrage possibles. Il importe, de ce fait, qu'il puisse manoeuvrer à distance l'organe d'accrochage de son équipement individuel sans qu'il lui soit nécessaire de faire des acrobaties ou des efforts importants. Cette perche, en prolongeant son rayon d'action, permet à l'utilisateur d'être autonome.

En pratique, la branche fixe du crochet est constituée de la réunion de deux plaques symétriques espacées d'une distance suffisante pour permettre le libre coulissement, entre elles, de la branche mobile, et les moyens de verrouillage des branches fixe et mobile sont constitués de zones dentées formant crémaillère.

Plus précisément, la zone dentée de la branche fixe est ménagée sur une pièce montée pivotante entre les deux plaques fixes, à l'encontre de la force d'un ressort de rappel, une cordelette de manoeuvre étant réunie, directement ou indirectement, à ladite pièce pour la faire pivoter en libérant ainsi l'une de l'autre les zones dentées des deux branches.

Un verrouillage par crémaillère est beaucoup plus sûr qu'une simple fermeture par encliquetage, comme le décrit US-A-3 167 346 : il suffit que le début des zones dentées soit entré en prise pour que le verrouillage se produise et qu'il se poursuive sur toute l'étendue de la crémaillère par suite de la traction exercée sur le crochet. Même si des débris de matériaux se sont interposés entre le branche mobile et le branche fixe, cela n'empêchera pas le verrouillage de se produire au moins sur la majeure partie de la crémaillère. Au contraire, dans le crochet selon US-A-3 167 346, des débris interposés entre les parties mobile et fixe peuvent empêcher le verrouillage ou déboucher sur un pseudo-verrouillage qui "lâchera" dès que la traction excèdera un certain seuil.

Pour éviter tout risque d'emmêlement de la cordelette et pour la protéger de toute action extérieure, la cordelette passe à l'intérieur de la perche et débouche à l'extrémité de celle-ci opposée au crochet.

Dans une forme d'exécution préférée, la branche fixe du crochet présente, en vis-à-vis de la pièce pivotante ou d'une pièce fonctionnellement réunie à celle-ci, une découpe traversante et cette découpe découvre une gachette ménagée dans ladite pièce, permettant ainsi un déverrouillage manuel à ce niveau.

Cette disposition est particulièrement utile pour les utilisateurs ayant un déplacement essentiellement vertical lors de leur travail, tels que les ouvriers sur pylônes électriques : en effet, ils accrochent le crochet bien au-dessus d'eux grâce à la perche, et leur progression en hauteur les amènent finalement au niveau du crochet. La gachette leur permet de décrocher directement le crochet, et la perche de le réaccrocher plus haut. A la descente, c'est en tirant sur la cordelette, en bas de perche, qu'ils dégagent le crochet du point d'ancrage.

Sur le plan pratique, l'extrémité interne de la branche mobile comporte une encoche de fin de course qui, en position d'ouverture, vient buter contre le moyen de suspension de la corde et le crochet comporte, en outre, un moyen de renfort de la branche fixe constitué d'un axe transversal monté entre les deux plaques la constituant et contre lequel vient buter, en position de fermeture, l'extrémité interne, conformée en crochet de la branche mobile.

L'invention sera mieux comprise à la lecture de la description ci-après faite en référence aux dessins annexés dans lesquels :
- la figure 1 représente une vue générale du dispositif selon l'invention, en situation ;
- la figure 2 représente une vue en coupe longitudinale de l'organe d'accrochage selon l'invention, en position d'ouverture partielle ;
- la figure 3 représente une vue en coupe longitudinale de l'organe d'accrochage de la figure 2, en position de fermeture ;
- la figure 4 représente une vue en coupe latérale prise selon la ligne IV-IV de la figure 3, et
- la figure 5 représente une vue en coupe longitudinale d'une variante d'exécution du dispositif selon l'invention.

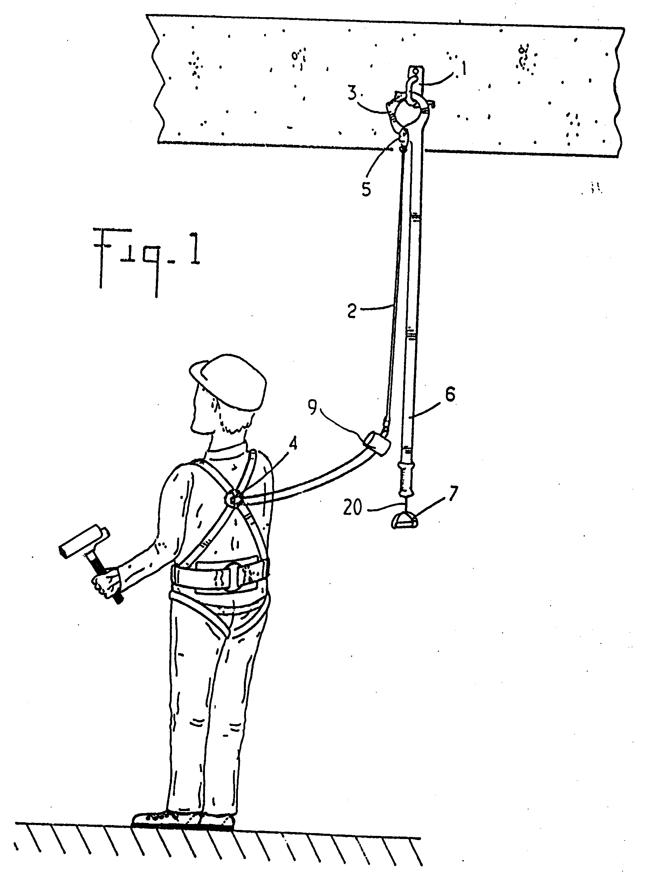

Si l'on se réfère à la figure 1, on voit un ouvrier porteur d'un harnais de sécurité 4 relié à un point d'ancrage 1. Ce point d'ancrage 1, vu sa hauteur, n'est pas directement accessible à l'ouvrier. Le dispositif proposé par l'invention lui permet néanmoins d'y relier son harnais 4 par l'intermédiaire d'une corde ou ligne de vie 2 munie d'un anneau 5 de suspension relié à un crochet 3 à fermeture et ouverture rapides. Ce crochet 3 est porté par une perche 6 qui permet à l'ouvrier de l'élever au niveau voulu et, le crochet étant ouvert, de crocheter le point d'ancrage. Comme décrit en détail ci-après, La fermeture du crochet se fait par traction sur la perche 6 et son ouverture peut être commandée au moyen d'une cordelette 20̸ passant à l'intérieur de la perche 6 et dont l'extrémité est munie d'une poignée 7.

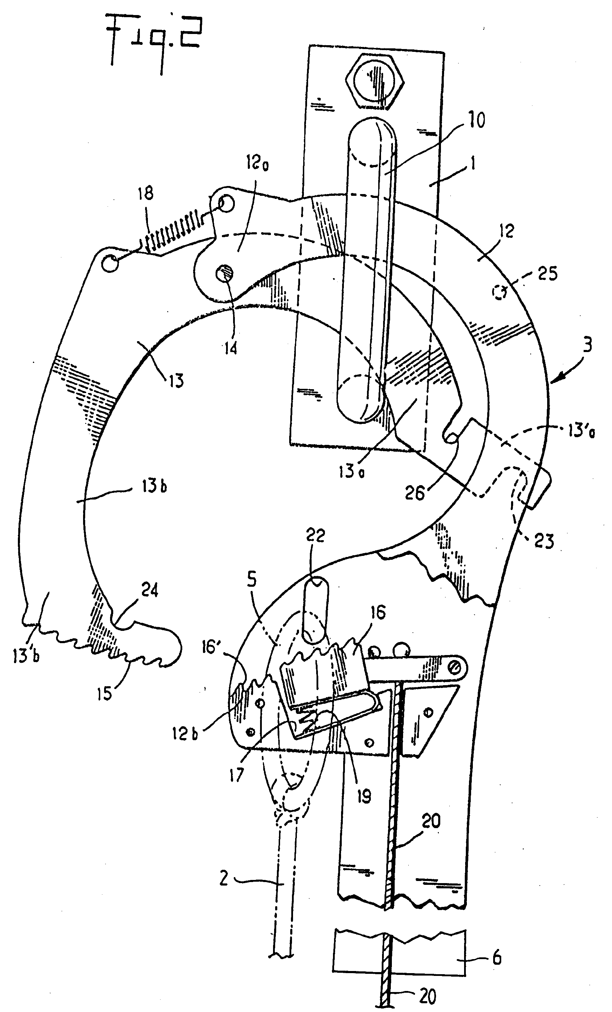

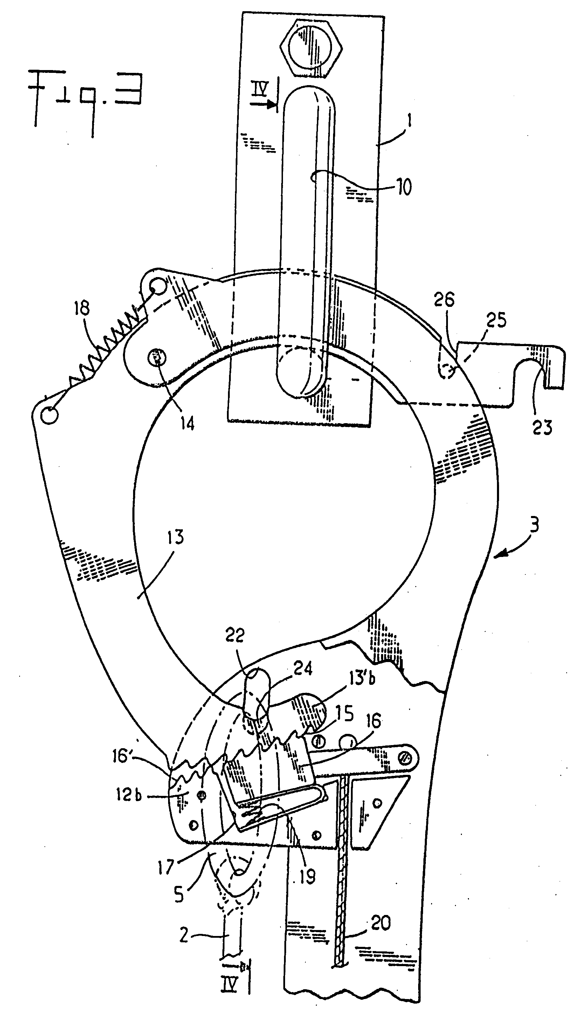

Comme il ressort des figures 2 et 3, le crochet 3 est comporte une branche fixe 12 et une branche mobile 13.

La branche fixe 12 est en forme de C (inversé sur le figures) avec une extrémité supérieure 12a et une extrémité inférieure 12b, l'extrémité 12a passant au travers d'une bride d'ancrage 10̸ dont est pourvu le point d'ancrage 1.

La branche 13 mobile est montée pivotante sur la branche fixe 12 au moyen d'un axe de pivotement 14 passant par l'extrémité supérieure 12a de la branche fixe 12 et par un point intermédiaire de la branche mobile 13, définissant ainsi un bras interne 13a et un bras externe 13b. La branche mobile 13 comporte ainsi une extrémité interne 13'a et une extrémité externe 13'b.

Le bras interne 13a forme bras de saisie pour la bride d'ancrage 10̸. Le pivotement de fermeture s'effectue par appui de la bride d'ancrage 10̸ contre ce bras interne 13a qui, sous l'effet d'une traction exercée sur la perche 6, pivote autour de l'axe 14 jusqu'à ce que l'extrémité externe 13'b du bras externe 13b de la branche mobile 13 vienne se verrouiller dans l'extrémité inférieure 12b de la branche fixe 12.

A cette fin le crochet 3 comprend des moyens de verrouillage sous tension en position de fermeture. Ces moyens de verrouillage sont constitués, d'une part, par une face externe dentée 15 de l'extrémité externe 13'b de la branche mobile 13 et, d'autre part, par une pièce dentée 16 montée dans un logement 17 prévu dans l'extrémité inférieure 12b de la branche fixe 12.

Les dents de la face 15 viennent s'insérer entre les dents de la pièce 16 pour maintenir les deux extrémités 13'b et 12b solidaires.

Il est prévu un dispositif de rappel élastique qui comporte un premier ressort 18 associé à l'axe de pivotement 14 et qui est fixé à la fois à l'extrémité supérieure 12a de la branche fixe et à la branche mobile 13, et un second ressort 19 associé à la pièce dentée 16 en étant disposé sous ladite pièce pour lui conférer une élasticité verticale.

Le ressort 18 tend à rappeler l'extrémité externe 13'b vers le haut (ouverture du crochet) tandis que le ressort 19 tend à presser la pièce 16 contre la face 15 pour maintenir les extrémités 13'b et 12b solidaires entre elles (fermeture du crochet).

La cordelette 20̸ est reliée à la pièce dentée 16. Au lieu d'une cordelette, on pourrait utiliser, comme moyen d'ouverture destiné à libérer les moyens de verrouillage, une tirette en un matériau rigide ou souple. Pour libérer l'extrémité 13'b de l'emprise de la pièce 16, il suffirait, en l'absence des moyens de sécurité prévus par l'invention, de tirer sur la cordelette 20̸ vers le bas, avec, pour effet, la compression du ressort 19 et le dégagement des dents de la face 15 de celles de la pièce 16. Lors du déverrouillage, le ressort 18 rappelle automatiquement le bras 13b vers le haut ce qui permet de retirer facilement le crochet 3 de la bride d'ancrage 10̸.

La cordelette 20̸, qui a une longueur au moins égale à celle de la perche 6, passe de préférence à l'intérieur de ladire perche, qui peut être téléscopique. La perche 6 permet de manoeuvrer le crochet 3 à distance et notamment de crocheter la bride d'ancrage 10̸ sur laquelle on désire s'assurer.

Le crochet 3 présente un passage traversant 22 ménagé dans la branche fixe 12 au-dessus de l'emplacement de la pièce 16. Ce passage traversant 22 permet l'introduction du moyen de suspension 5, en l'occurence de l'anneau de suspension 5, de la corde 2 reliée au harnais 4. Au lieu d'être constitué par un anneau, le moyen de suspension 5 pourrait être constitué par une maille ou un mousqueton.

Les moyens de sécurité auxquels il est fait allusion plus haut sont constitués, d'une part, par l'anneau de suspension 5 lui-même et par une encoche de blocage 24 ménagée sur la face interne opposée à la face dentée 15 de l'extrémité interne 13'b de la branche mobile 13. Ces deux structures 5 et 24 coopèrent en position de fermeture, en ce sens que l'anneau 5 vient se loger dans l'encoche de blocage 24 en exerçant sur la branche mobile 13 une pression verticale qui interdit le déverrouillage même si, par accident, une traction est exercée sur la cordelette 20̸. Cela est vrai même si le porteur de harnais perd subitement l'équilibre et fait une chute car la corde ou ligne de vie 2 est mise brutalement sous tension par le poids de l'individu en bout de ligne et l'anneau 5 appuie fortement sur l'encoche 24, empêchant toute ouverture du crochet 3.

L'ouverture ne peut être obtenue que volontairement en tirant sur la cordelette 20̸ tout en soulageant l'anneau 5 de toute traction. Pour ce faire, on peut donner une secousse vers le haut à la corde 2 et, éventuellement, donner un coup sur l'intérieur du bras 13b contre la bride d'ancrage 10̸, à l'aide de la perche 6, pour aider à l'ouverture.

Le moyen de sécurité est complété par une série de dents 16' ménagées dans l'extrémité inférieure 12b de la branche fixe 12 sur la face supérieure du rebord avant du logement 17 de la pièce 16. Cette série de dents 16' ne se trouve pas, en temps normal, au contact des dents de la face 15, mais uniquement en cas de chute accidentelle si, sous le choc, le ressort 19 venait à se comprimer brutalement pour laisser échapper l'extrémité 13'b et si, pour une raison peu probable, l'anneau 5 venait en outre à sauter de l'encoche 24.

En position d'ouverture complète, l'extrémité interne 13'a de la branche mobile 13 vient au contact dudit anneau 5 qui joue ainsi un rôle de butée pour la branche mobile 13. A cet effet, l'extrémité 13'a est conformée en crochet dont le creux 23 est destiné à recevoir la partie supérieure de l'anneau 5. On comprend que le crochet 3 ne se trouve jamais au repos dans la position d'ouverture partielle représentée à la figure 2 pour la clarté du dessin. Lorsque le crochet est déverrouillé, le creux 23 est en butée contre l'anneau 5, sous l'effet du ressort 18, de sorte que le crochet est largement ouvert.

La branche fixe 12 comporte également un moyen de renfort constitué d'un axe transversal 25 disposé au même niveau que l'axe de pivotement 14, soit sensiblement au milieu de la branche fixe 12.

Cet axe 25 forme butée en position de fermeture pour une encoche 26 ménagée sur le bord externe du bras interne 13a de la branche mobile 13.

La coopération entre l'axe transversal 25 et l'encoche 26 permet d'obtenir une position correcte de la face dentée 15 sur la pièce dentée 16, c'est-à-dire que toutes les dents de la pièce 16 sont effectivement engagées entre celles de la face 15.

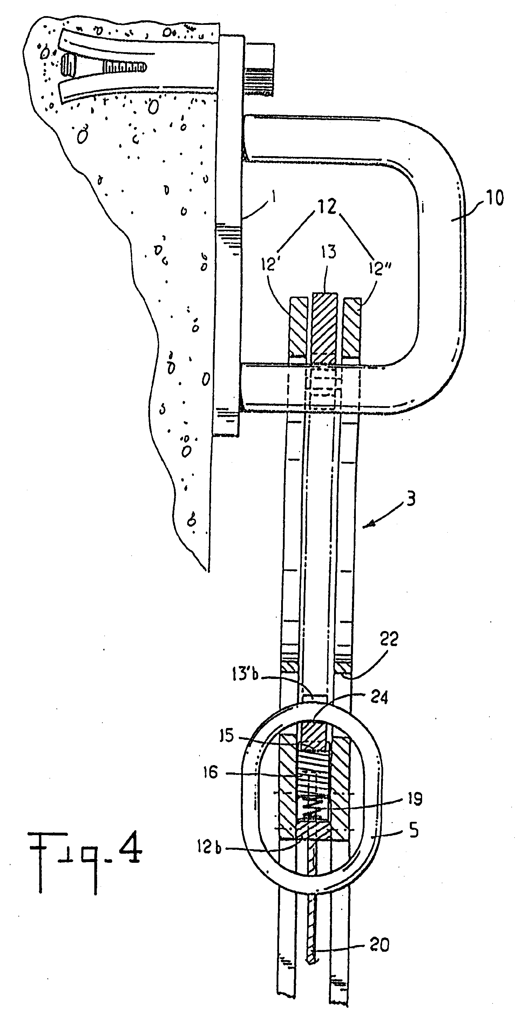

Comme le montre la figure 4, la branche fixe 12 est réalisée par la réunion de deux plaques parallèles symétriques (12', 12˝) espacées d'une distance suffisante pour permettre le libre coulissement du bras interne 13a de la branche mobile 13 lors du pivotement de fermeture et d'ouverture.

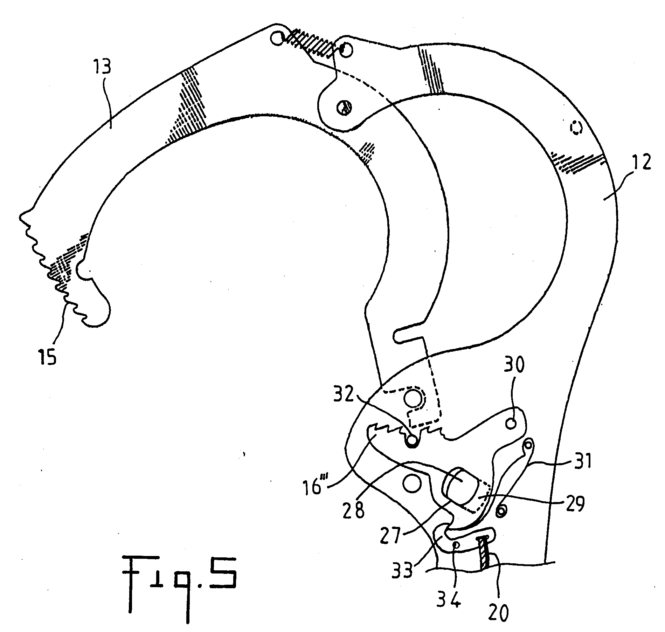

La figure 5 montre une variante de réalisation du crochet. Les pièces communes à cette variante et à la forme d'exécution représentée aux figures 2 à 4 sont désignées par les mêmes reférences et elles ne seront pas décrites à nouveau.

La variante se distingue de la forme d'exécution précédente par le fait qu'elle comporte un système de gachette permettant de déverrouiller le crochet 3 en agissant au niveau dudit crochet. Plus précisément, la pièce 16˝′, portant les dents adaptées à coopérer avec les dents 15, est montée pivotante autour d'un axe 30̸. Une lame de ressort 31 tend à la maintenir en appui contre une butée 32. La pièce 16˝′ est d'autre part susceptible d'être sollicitée, à l'encontre de la force du ressort, par une pièce 33 montée pivotante autour d'un axe 34 et susceptible d'être elle-même sollicitée par la cordelette 20̸. La pièce 16˝′ présente une découpe 27 en vis-à-vis partiel de découpes traversantes 28 pratiquées dans les plaques 12' et 12˝ constituant la branche fixe 12 du crochet. Ces découpes traversantes 28 et la découpe 27 permettent de passer le doigt au travers du crochet et d'exercer une pression sur la partie 29 de la pièce 16˝′, visible au travers des découpes 28, et de surmonter directement l'action du ressort 31 pour déverrouiller le crochet.

Le crochet selon l'invention est réalisé en tout matériau suffisamment solide pour résister à l'effort que peut entraîner la chute du porteur de l'équipement, comme par exemple du métal, de la résine armée, etc..

Dans le cas où il est requis que le crochet ait un grand diamètre et qu'il soit capable de supporter une charge de deux tonnes par exemple, il peut être nécessaire de le renforcer au moyens de pièces de verrouillage complémentaires dépendant respectivement de l'extrémité inférieure de la branche fixe et de l'extrémité externe de la branche mobile, lesdites pièces servant en outre d'ancrage à une élingue en acier (ou à un cordage ou à une sangle plate en acier) longeant, avec un guidage approprié, la périphérie du crochet, zone d'ouverture exclue.

On peut utiliser le dispositif selon l'invention pour tous types de travaux, que ce soit dans le bâtiment ou l'industrie, pour l'élagage des arbres, les travaux sur les pylônes, les tours, les ponts, les cheminées du type Electricité de France.

## Revendications

1. Dispositif de sécurité pour équipement individuel de protection contre les chutes du type comprenant un harnais (4) fixé à la première extrémité d'une corde (2) dont la seconde extrémité est reliée à un organe d'accrochage (3) susceptible d'être temporairement réuni à un point d'ancrage (10̸) situé au-dessus de l'utilisateur, l'organe d'accrochage (3) comportant un crochet à ouverture et fermeture rapides, en forme d'anneau composé d'une branche fixe (12) ayant sensiblement la forme d'un C et d'une branche mobile (13), articulée sur la branche fixe et pivotant à l'intérieur de celle-ci, ladite branche mobile comportant deux extrémités libres dites, respectivement, interne (13'a) et externe (13'b), l'extrémité libre inférieure (12b) du C de la branche fixe (12) ayant un passage traversant (22) destiné à recevoir un moyen de suspension (5) de ladite corde (2), caractérisé en ce que la branche mobile (13) est articulée à l'extrémité supérieure (12a) de la branche fixe (12), l'extrémité libre externe (13'b) de la branche mobile (13) offrant, sur l'un de ses bords, des moyens de verrouillage (15) et, sur son bord opposé, une encoche de blocage (24), tandis que l'extrémité libre inférieure (12b) du C de la branche fixe (12) offre, d'une part, des moyens de verrouillage (16) complémentaires à ceux (15) de la branche mobile (13) et, d'autre part, le passage traversant (22) intersecte l'espace occupé par l'extrémité externe (13'b) de la branche mobile (13) lorsqu'elle est verrouillée sur la branche fixe (12), le moyen de suspension (5) de la corde (2) venant se loger dans l'encoche de blocage (24) de la branche mobile (13) en position de verrouillage pour interdire l'ouverture du crochet (3) tant que le moyen de suspension (5) n'est pas soulagé de toute traction.

2. Dispositif selon la revendication 1, caractérisé en ce que l'articulation, entre la branche mobile (13) et la branche fixe (12), se fait, au moyen d'un axe de pivotement (14) passant par l'extrémité libre supérieure (12a) du C de la branche fixe (12) et par un point intermédiaire de la branche mobile (13), la partie (13a) de la branche mobile s'étendant entre le point d'articulation (14) et son extrémité libre interne (13'a) formant bras de saisie du point d'ancrage (10̸), le pivotement de la branche mobile (13) en vue du verrouillage du crochet, à l'encontre de la force d'un ressort (18) qui tend à maintenir le crochet ouvert, résultant de l'appui exercé par le point d'ancrage (10̸) sur le bras de saisie (13a) lorsqu'ils sont en contact l'un avec l'autre et qu'une traction, vers le bas, est exercée sur le crochet (3).

3. Dispositif selon la revendication 1 ou 2, caractérisé en ce que la branche fixe (12) du crochet est montée à l'extrémité d'une perche de manoeuvre (16).

4. Dispositif selon l'une quelconque des revendications 1 à 3, caractérisé la branche fixe (12) est constituée de la réunion de deux plaques symétriques (12', 12˝) espacées d'une distance suffisante pour permettre le libre coulissement, entre elles, de la branche mobile (13).

5. Dispositif selon l'une quelconque des revendications 1 à 4, caractérisé en ce que les moyens de verrouillage des branches fixe (12) et mobile (13) sont constitués de zones dentées (16, 15) formant crémaillère.

6. Dispositif selon la revendication 5, caractérisé en ce que la zone dentée de la branche fixe est ménagée sur une pièce (16) montée pivotante entre les deux plaques fixes (12', 12˝), à l'encontre de la force d'un ressort de rappel (19), une cordelette de manoeuvre (20̸) étant réunie, directement ou indirectement, à ladite pièce (16) pour la faire pivoter en libérant ainsi l'une de l'autre les zones dentées (15, 16) des deux branches.

7. Dispositif selon les revendications 3 et 6 considérées conjointement, caractérisé en ce que la cordelette (20̸) passe à l'intérieur de la perche (6) et débouche à l'extrémité de celle-ci opposée au crochet (3).

8. Dispositif selon l'une quelconque des revendications 6 ou 7, caractérisé en ce que la branche fixe (12) présente, en vis-à-vis de la pièce pivotante (16˝′) ou d'une pièce fonctionnellement réunie à celle-ci, une découpe traversante (28) et en ce que cette découpe (28) découvre une gachette (29) ménagée dans ladite pièce (16˝′), permettant ainsi un déverrouillage manuel à ce niveau.

9. Dispositif selon l'une quelconque des revendications 1 à 8, caractérisé en ce que l'extrémité interne (13'a) de la branche mobile (13) comporte une encoche de fin de course (23) qui, en position d'ouverture, vient buter contre le moyen de suspension (5) de la corde (2).

10. Dispositif selon l'une quelconque des revendications 4 à 9, caractérisé en ce que le crochet (3) comporte, en outre, un moyen de renfort de la branche fixe (12) constitué d'un axe transversal (25) monté entre les deux plaques (12', 12˝) la constituant et contre lequel vient buter, en position de fermeture l'extrémité interne (26), conformée en crochet de la branche mobile (12).

## Patentansprüche

1. Schutzvorrichtung für persönliche Absturzsicherungsausrüstung, die ein Geschirr (4) umfaßt, das am ersten Ende eines Seils (2) befestigt ist, dessen zweites Ende mit einem Einhakorgan (3) verbunden ist, das zeitweise mit einem über dem Benutzer angeordneten Verankerungspunkt (10) verbunden werden kann und einen schnell öffnenden und schließenden Haken in Form eines Rings umfaßt, der aus einem feststehenden Schenkel (12) im wesentlichen mit der Form eines C und aus einem beweglichen Schenkel (13) besteht, der an dem feststehenden Schenkel angelenkt ist, in dessen Innerem verschwenkbar ist und zwei Enden, inneres Ende (13'a) bzw. äußeres Ende (13'b) genannt, umfaßt, wobei das freie untere Ende (12b) des C des feststehenden Schenkels (12) einen durchgehenden Durchgang (22) besitzt, der zur Aufnahme eines Mittels (5) zur Aufhängung des Seils (2) dient, dadurch gekennzeichnet, daß der bewegliche Schenkel (13) am oberen Ende (12a) des feststehenden Schenkels (12) angelenkt ist, wobei das freie äußere Ende (13'b) des beweglichen Schenkels (13) an einem seiner Ränder Verriegelungsmittel (15) und an seinem entgegengesetzten Rand eine Blockierkerbe (24) aufweist, während das freie untere Ende (12b) des C des feststehenden Schenkels (12) einerseits die Verriegelungsmittel (15) des beweglichen Schenkels (13) ergänzende Verriegelungsmittel (16) aufweist und der durchgehende Durchgang (22) andererseits den Raum schneidet, der von dem äußeren Ende (13'b) des beweglichen Schenkels (13) eingenommen wird, wenn er an dem feststehenden Schenkel (12) verriegelt ist, wobei das Mittel (5) zur Aufhängung des Seils (2) in der Verriegelungsstellung in die Blockierkerbe (24) eintritt, um die Öffnung des Hakens (3) zu sperren, solange das Aufhängungsmittel (5) nicht von jedem Zug entlastet ist.

2. Vorrichtung nach Anspruch 1, dadurch gekennzeichnet, daß das Gelenk zwischen dem beweglichen Schenkel (13) und dem feststehenden Schenkel (12) durch eine Schwenkachse (14) gebildet ist, die das freie obere Ende (12a) des C des feststehenden Schenkels (12) und einen zwischenliegenden Punkt des beweglichen Schenkels (13) durchquert, wobei der Teil (13a) des beweglichen Schenkels, der sich zwischen dem Gelenkpunkt (14) und seinem freien inneren Ende (13'a) erstreckt, einen Arm zum Ergreifen des Verankerungspunkts (10) bildet und das Verschwenken des beweglichen Arms (13) entgegen der kraft einer Feder (18), die bestrebt ist, den Haken offen zu halten, zum Zweck der Verriegelung des Hakens sich aus der Abstützung ergibt, die von dem Verankerungspunkt (10) auf den Greifarm (13a) ausgeübt wird, wenn diese in gegenseitigem Kontakt sind und wenn auf den Haken (3) ein Zug nach unten ausgeübt wird.

3. Vorrichtung nach Anspruch 1 oder 2, dadurch gekennzeichnet, daß der feststehende Schenkel (12) des Hakens am Ende einer Betätigungsstange ( 6) montiert ist.

4. Vorrichtung nach einem der Ansprüche 1 bis 3, dadurch gekennzeichnet, daß der feststehende Schenkel (12) aus der Vereinigung von zwei symmetrischen Platten (12',12˝) besteht, die in einem ausreichenden Abstand angeordnet sind, um zwischen sich das freie Gleiten des beweglichen Schenkels (13) zu gestatten.

5. Vorrichtung nach einem der Ansprüche 1 bis 4, dadurch gekennzeichnet, daß die Verriegelungsmittel des feststehenden Schenkels (12) und des beweglichen Schenkels (13) aus eine Zahnstange bildenden, gezahnten Zonen bestehen.

6. Vorrichtung nach Anspruch 5, dadurch gekennzeichnet, daß die gezahnte Zone des feststehenden Schenkels auf einem Teil (16) vorgesehen ist, das entgegen der Kraft einer Rückholfeder (19) verschwenkbar zwischen den beiden feststehenden Platten (12', 12˝) montiert ist, wobei eine Betätigungsleine (20) direkt oder indirekt mit dem Teil (16) verbunden ist, um es verschwenken zu lassen, indem es auf diese Weise die gezahnten Zonen (15, 16) der beiden Schenkel voneinander freigibt.

7. Vorrichtung nach den Ansprüchen 3 und 6 zusammen, dadurch gekennzeichnet, daß die Leine (20) im Inneren des Stabs (6) läuft und an dessen dem Haken (3) entgegengesetzten Ende ausmündet.

8. Vorrichtung nach einem der Ansprüche 6 oder 7, dadurch gekennzeichnet, daß der feststehende Schenkel (12) gegenüber dem verschwenkbaren Teil (16˝′) oder einem funktionell mit diesem verbundenen Teil einen durchgehenden Ausschnitt (28) aufweist und daß dieser Ausschnitt (28) einen in dem Teil (16˝′) vorgesehenen Drücker (29) freilegt, der eine manuelle Entriegelung in dieser Höhe gestattet.

9. Vorrichtung nach einem der vorhergehenden Ansprüche, dadurch gekennzeichnet, daß das innere Ende (13'a) des beweglichen Schenkels eine Hubbegrenzungskerbe (23) aufweist, die in Öffnungsstellung an dem Mittel (5) zur Aufhängung des Seils (2) in Anschlag kommt.

10. Vorrichtung nach einem der Ansprüche 4 bis 9, dadurch gekennzeichnet, daß der Haken (3) außerdem ein Mittel zur Verstärkung des feststehenden Schenkels (12) umfaßt, das aus einer Querachse (25) besteht, die zwischen den beiden den Schenkel bildenden Platten (12', 12˝) montiert ist und an der das hakenförmige innere Ende (26) des beweglichen Schenkels (12) in Verschlußstellung in Anschlag kommt.

## Claims

1. Safety device for personal equipment for preventing falls of the type including a harness (4) fixed to the first end of a rope (2) the second end of which is connected to a fastening member (3) which is capable of being temporarily joined to an anchoring point (10) located above the user, the fastening member (3) comprising a rapidly opening and closing, ring-shaped hook made up of a stationary portion (12) having substantially the shape of a C and of a movable portion (13), articulated to the stationary portion and pivoting inside the latter, the said movable portion comprising two free ends called, respectively, inner (13'a) and outer (13'b), the lower free end (12b) of the C of the stationary portion (12) having a through passage (22) intended to receive a means (5) for suspending the said rope (2), characterised in that the movable portion (13) is articulated to the upper end (12a) of the stationary portion (12), the outer free end (13'b) of the movable portion (13) having locking means (15) on one of its edges and an immobilising notch (24) on its opposing edge, while the lower free end (12b) of the C of the fixed portion (12 ) has, on the one hand, locking means (16) which complement those (15) of the movable portion (13) and, on the other hand, the through passage (22) intersects the space occupied by the outer end (13'b) of the movable portion (13) when the latter is locked on the stationary portion (12), the means (5) for suspending the rope (2) being housed in the notch (24) for immobilising the movable portion (13) in the locked position so as to prevent the hook (3) from opening as long as the suspension means (5) is not relieved from any traction force.

2. Device according to Claim 1, characterised in that the movable portion (13) is articulated to the stationary portion (12) by means of a pivoting pin (14) passing through the upper free end (12a) of the C of the stationary portion (12) and through an intermediate point on the movable portion (13), the part (13a) of the movable portion extending between the articulation point (14) and its inner free end (13'a) forming an arm for grasping the anchoring point (10), the pivoting of the movable portion (13) for locking the hook, against the force of a spring (18) which tends to hold the hook open, resulting from the thrust exerted by the anchoring point (10) on the grasping arm (13a) when they are in contact with each other and when a downward traction force is exerted on the hook (3).

3. Device according to Claim 1 or 2, characterised in that the stationary portion (12) of the hook is installed at the end of a control pole (6).

4. Device according to any one of Claims 1 to 3, characterised in that the stationary portion (12) consists of the joining of two symmetrical plates (12', 12˝) separated by a distance sufficient to allow the movable portion (13) to slide freely between them.

5. Device according to any one of Claims 1 to 4, characterised in that the means for locking the stationary (12) and movable (13) portions consist of toothed zones (16, 15) forming a rack.

6. Device according to Claim 5, characterised in that the toothed zone of the stationary portion is arranged on a piece (16) which is installed so that it can pivot between the two stationary plates (12', 12˝), against the force of a return spring (19), a control cord (20) being joined, directly or indirectly, to the said piece (16) in order to pivot it, thereby releasing one of the toothed zones (15, 16) of the two portions from the other.

7. Device according to Claims 3 and 6 considered jointly, characterised in that the cord (20) passes inside the pole (6) and emerges at the opposite end of the latter to the hook (3).

8. Device according to either of Claims 6 and 7, characterised in that the stationary portion (12) has, opposite the pivoting piece (16˝′) or a piece which is functionally joined to the latter, a through cut-out (28) and in that this cut-out (28) exposes a trigger (29) arranged in the said piece (16˝′), thus allowing manual unlocking at this level.

9. Device according to any one of Claims 1 to 8, characterised in that the inner end (13'a) of the movable portion (13) comprises a travel-limit notch (23) which, in the open position, bears against the means (5) for suspending the rope (2).

10. Device according to any one of Claims 4 to 9, characterised in that the hook (3) comprises, in addition, a means for reinforcing the stationary portion (12) consisting of a transverse pin (25) installed between the two plates (12', 12˝) making up this portion and against which pin the hook-shaped inner end (26) of the movable portion (12) bears in the closed position.
